Europäisches Patentamt

European Patent Office

Office européen des brevets

(19)

(11) **EP 0 741 450 B1**

(12) **EUROPEAN PATENT SPECIFICATION**

(45) Date of publication and mention
of the grant of the patent:
**16.06.1999 Bulletin 1999/24**

(51) Int Cl.6: **H02P 7/638**

(21) Application number: **96400913.8**

(22) Date of filing: **26.04.1996**

(54) **Sensorless motor speed controller**

Geschwindigkeitsregler für einen sensorlosen Motor

Circuit de commande de la vitesse d'un moteur n'utilisant pas de capteur

(84) Designated Contracting States:
**DE FR GB IT**

(30) Priority: **26.04.1995 FR 9505011**

(43) Date of publication of application:
**06.11.1996 Bulletin 1996/45**

(73) Proprietor: **STMicroelectronics S.A.**
**94250 Gentilly (FR)**

(72) Inventors:
• **Nicolai, Jean**
**13790 Chateau-Neuf le Rouge (FR)**
• **Bailly, Alain**
**13109 Simiane Collongue (FR)**

(74) Representative: **Schmit, Christian Norbert Marie**
**Cabinet Ballot-Schmit**
**7, rue Le Sueur**
**75116 Paris (FR)**

(56) References cited:
**DE-A- 3 512 438**

# Description

The invention relates to the field of the control of the speed of electric motors, more particularly to the control of the speed of universal motors supplied with an AC voltage.

It is commonly required to control or regulate the speed of electric motors in equipment such as electric drills, washing machines or vacuum cleaners. The speed should be kept approximately constant, regardless of the mechanical loading of the motor. In such domestic applications, highly accurate motor speed measurement and control is unnecessary.

Known motor speed control circuits fall into two categories. Firstly, they may use open loop control, in that they control the power input to a motor, but have no feedback to determine actual motor speed, and thus are very ineffective, especially when the mechanical load on a motor may change during use. Secondly, they may use a mechanical feedback sensor, such as an optical disk or a magnet, in communication with an optical or magnetic sensor, to measure the speed of rotation of an electric motor. These sensors are expensive, and require a complex installation. The physical alignment of sensors must be accurate, and may require adjustment during installation, which makes the use of speed controlled universal motors costly and complex.

Universal motors powered by an AC voltage may be phase controlled by supplying timed gate pulses to a triac, connected in series with the universal motor. One triac gate pulse per half cycle is supplied, at a certain point in the half cycle. This turns the triac on and supplies current to the universal motor for a portion of each AC half cycle. In response to the measured speed of rotation, the certain point may be adjusted to supply current to the universal motor for a longer or shorter portion of the AC half cycle.

German Patent Application DE-A-3512438 discloses a circuit for determining and regulating the speed of rotation of an electric motor with reference to an average current flowing through that motor.

Universal motors may be used indifferently with DC or AC voltages. They have the following electrical characteristics. The instantaneous current i through the universal motor is related to the voltage u across it by the equation:

$$i = u/(Rf + Kv.V) \qquad I$$

where Rf is the resistance of the field winding, V is the speed of rotation of the universal motor, and Kv is a constant depending on the windings and the geometry of the particular universal motor. A universal motor therefore has a resistive characteristic, the equivalent resistance depending on the speed of rotation V of the universal motor. When used with an AC supply voltage, the current flowing in the universal motor becomes out of phase with the applied AC voltage, due to the inductance of the windings of the universal motor.

An object of the current invention is to provide a method for controlling the speed of a universal motor without using a mechanical feedback sensor.

A further object of the current invention is to provide a circuit for controlling the speed of a universal motor which is simple to install.

A further object of the current invention is to provide a circuit for controlling the speed of a universal motor that requires no adjustments or modifications to the universal motor during installation.

Accordingly, the invention provides a method for controlling the speed of a universal motor driven by an AC source, comprising the steps of:

- phase controlling the current through the universal motor;

characterised in that it comprises the steps of:

- measuring a value of an instantaneous temporal property of a waveform of the current, to determine the speed of rotation of the universal motor;
- comparing the measured value of the temporal property to a predetermined value; and
- adjusting the phase control to cause the measured value of the instantaneous temporal property to approach the predetermined value.

The method may further comprise the step of selecting the predetermined value from a number of stored values.

The measured property may be one of: the instantaneous current flowing at a predetermined point in time during the AC cycle; the instantaneous current flowing at a voltage zero crossing point in an AC cycle; the rate of decrease of the current at a certain time near the end of current conduction during each AC half cycle; the time between a voltage zero crossing point and the end of current conduction during each AC half cycle; or the time between a voltage zero crossing point and the current attaining the predetermined value.

The predetermined value may be determined as a function of the level of the phase control.

A circuit for the control of the speed of a universal motor driven from an AC voltage is also provided, comprising: a phase control component in series with the universal motor; a current sensing means for measuring the current flowing through the universal motor, characterised in that the circuit includes means for measuring a current, in order to measure an instantaneous value of a temporal property of a waveform of the current flowing in the universal motor; a pulse generating circuit for generating control signals to the phase control component; a timing circuit for timing the control signals with respect to the AC voltage cycle; a reference circuit for indicating a predetermined value of a temporal property of a waveform of the current through the universal motor; a control circuit for controlling the timing circuit to cause the measured instantaneous value of the temporal property to approach the predetermined value.

The predetermined value may be selected from a number of stored values.

The pulse generating circuit, the timing circuit, the measuring circuit, the control circuit and the reference circuit may, preferably, be replaced by a microcontroller including a synchronisation input, an analogue to digital converter, a counter, a voltage reference, an input/output circuit, a central processing unit and a non-volatile memory.

Certain embodiments of the current invention will be described, by way of example, with reference to the accompanying diagrams, wherein:

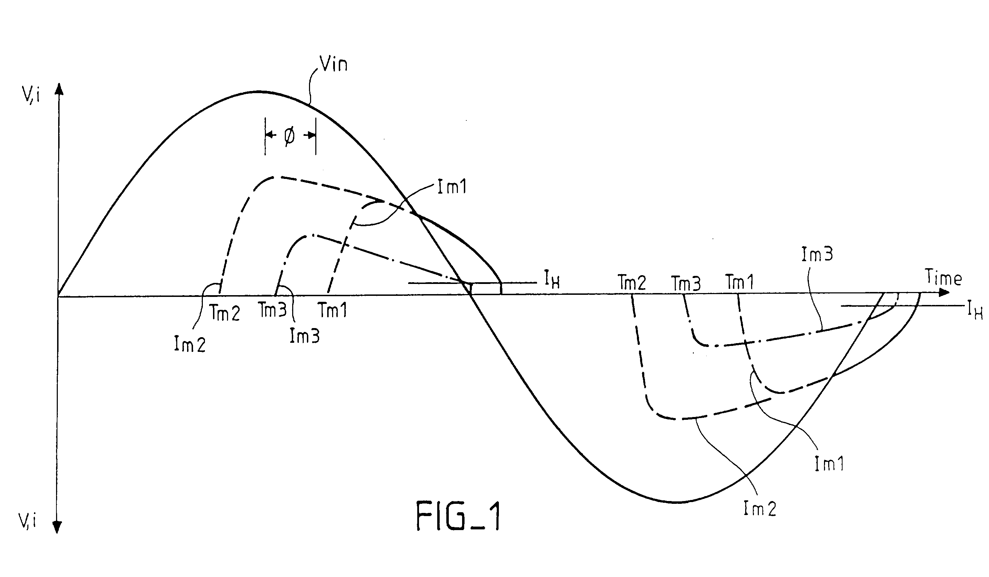

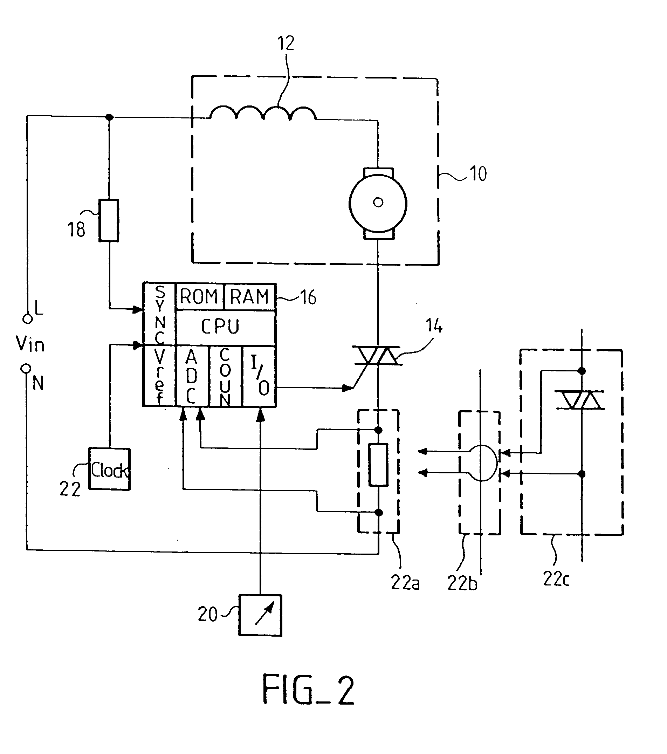

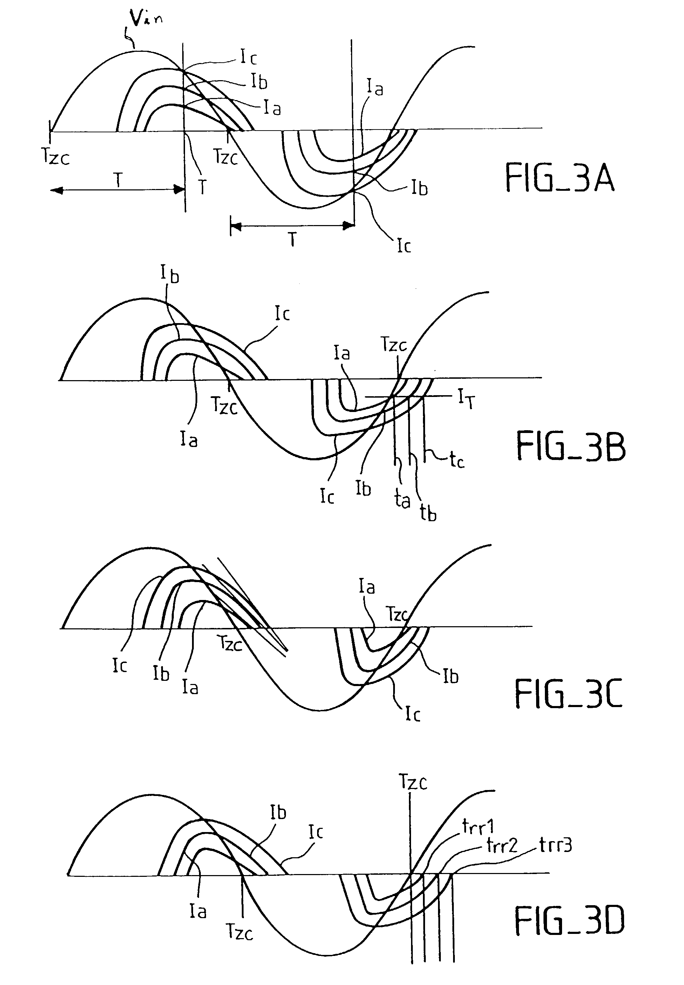

figure 1 shows typical voltage and current waveforms for a universal motor operated with an AC supply, under various operating conditions; figure 2 shows a circuit according to an embodiment of the invention; and figures 3A to 3D show typical voltage and current waveforms for a universal motor operated with an AC supply, under various operating conditions, illustrating speed measurement methods according to alternative embodiments of the current invention.

In figure 1, an AC voltage Vin is shown along with various currents Im1, Im2, Im3 flowing in a phase controlled universal motor and supplied with Vin, under various operating conditions. The currents are phase lagging the applied voltage Vin by an amount f, due to the inductance of the universal motor. At a given speed, the average current is proportional to the average voltage.

The current Im1 is the current flowing in the universal motor when running at a relatively low speed, such as 2000rpm, at a relatively low mechanical load, such as 3Nm. The current Im2 is the current flowing in the universal motor when running at the same relatively low speed, but with a higher mechanical load, such as 10Nm. The current Im3 is the current flowing in the universal motor when running at a higher speed, such as 5000rpm, at a relatively low mechanical load, such as 3Nm. At times Tm1, Tm2, Tm3 in each half cycle, a control pulse is applied to the phase control component, such as a triac, which begins to conduct. Although the instantaneous current that will flow is in principle proportional, and phase shifted, to the applied instantaneous voltage, some deformation of the current waveform may be expected, due to the inductance of the circuit, parasitic capacitance and series resistance. There will be a finite slope to the initial increase of current following the turning on of the triac, followed by a certain overshoot, then settling to a value proportional to the instantaneous voltage. This is visible, for example, in the Current Im1. As the current diminishes, at the end of each half cycle, the current will fall below the minimum holding current IH of the triac, and the current Im1, Im2, Im3 will stop abruptly.

It can be seen that, for a fixed speed, the instantaneous current is proportional to the applied voltage, Vin, but the duration of application of the current is longer for a universal motor driving a higher mechanical load. For a motor being driven at a higher speed, the instantaneous current is lower, but the duration of application of the current is longer to drive a given mechanical load.

From equation I presented above, it can be seen that the instantaneous current flowing through a universal motor (during a part of the period of conduction of the triac) depends only on the speed of rotation of the motor, and certain constants, when the motor is supplied with a voltage of a constant value (such as the AC mains supply). Thus, for any given universal motor, only the value of the instantaneous current is needed to enable the speed of rotation to be deduced.

Figure 2 shows a universal motor speed control circuit according to the invention. A universal motor 10 including an inductive winding 12 is connected through a triac 14 to two terminals L, N, receiving an AC supply voltage Vin. One of the terminals, N, is taken as a ground reference voltage. Control signals are sent to the triac by a microcontroller 16. The microcontroller contains a voltage reference Vref, an analogue to digital converter ADC, a counter COUN, Input/Output circuitry I/O, a synchronisation input circuit SYNC, a central processing unit CPU, random access memory RAM and non-volatile memory ROM, interconnected amongst themselves. A resistor 18 connects a synchronisation input of the microcontroller to the supply voltage. A control switch 20, which may be manually adjustable, for example, sends speed selection signals to the input/output circuitry I/O of the microcontroller.

Analogue to digital converter ADC receives current information from a current sensor connected in series with the triac 14 and the universal motor 10. The current sensor may take one of several forms. For example, it may be a series resistor 22a of known value, the voltage across the terminals indicating the current flowing. It may be a magnetic pickup 22b in the form of a winding around the conductor connecting the N terminal to the triac 14, the intensity of the magnetic field indicating the current flowing. It may simply be connections, 22c allowing a voltage across the triac to be measured. A clock signal generator 22 is provided to supply a clock signal to the microcontroller 16. In practice, this clock signal generator may be integrated into the microcontroller 16. A DC supply voltage, preferably derived from the AC supply Vin, is supplied to the microcontroller 16, and the clock signal generator 22, but is omitted from the diagram for clarity.

During operation, control gate pulses are supplied, one per half cycle of the AC voltage Vin, to the triac 14 by the I/O circuitry of the microcontroller, in response to a required speed indicated to I/O by the operation of control switch 20. The temporal properties of the waveform of the current flowing through the universal motor and the triac are measured by ADC, by comparison with a reference voltage supplied by Vref. This measurement may be repeated once or many times per half cycle of Vin. The measurements are timed by counter COUN counting cycles of the clock signal supplied by 22. The values of the measured temporal property may be stored in the memory RAM. Synchronisation to the AC half cycles is achieved by the synchronisation circuit SYNC, receiving a representation of Vin from resistor 18. The central processing unit CPU acts according to instructions and data in the non-volatile memory ROM, responding to the measured values of the temporal properties of the waveform of the current, to adjust the timing of gate signals to the triac, to achieve and maintain the required speed of the motor.

As the voltage Vin is fixed, at say 220Vrms, and the microcontroller 16 will only be used with one particular motor 10, values of Vin, Rf and Kv may be stored in ROM.

Figures 3A to 3D show, figuratively, current waveforms flowing in a universal motor operated at three different speeds, under a constant applied AC voltage Vin. Different properties of the current waveforms are highlighted, according to various embodiments of the current invention.

The embodiments of the invention described below show, in a general manner, that the temporal properties of the waveform of the current flowing through the motor during an AC cycle are used to determine the operational parameters of the motor.

In a first embodiment of the invention, referring to figure 3A, a current measurement may be made at a certain fixed point T in each half cycle of Vin. This fixed point T is measured by counter COUN counting periods of the clock signal since a previous voltage zero crossing point Tzc, detected by synchronisation circuit SYNC. The counter COUN may be preset at each AC half cycle. With fixed u, Rf and Kv, the relationship between the instantaneous current at a fixed point T and the speed of rotation allows microcontroller 16 to calculate the actual speed of rotation. The series resistor 22a or magnetic 22b current detector may be used to measure an absolute value of current. The actual speed is compared by microcontroller 16 to the required speed of rotation, and the timing of the gate pulses to the triac 14 is adjusted accordingly. Advancing the pulses will speed up the motor; retarding the pulses will slow down the motor.

The speed of rotation V of the motor is calculated as:

$$V = (Vp \sin w.T)/(Kv.I(T)) - Rf/Kv \qquad \text{II}$$

where Vp sin w.T is the instantaneous value of the voltage Vin at time T, w being the angular frequency, and Vp the peak value, of Vin. For a given motor, Rf and Kv are known, and for a known Vp sin w.T (a given T and known w, Vp), the speed of rotation V may be calculated from equation II as a function of I(T) - the instantaneous value of current through the motor at time T. The equation II is only approximate. The inductance 12 of the motor 10 is ignored. This is of no importance for the first four embodiments of the invention described in relation to figures 3A, 3B, 3C, but will be considered in the fifth described embodiment.

In a second embodiment of the invention (not illustrated), the fixed point coincides with the voltage zero crossing point. This leads to simpler measurement by the microcontroller, as no delay from the zero crossing point needs to be counted. The series resistor 22a or magnetic 22b current detector may be used to measure an absolute value of current. Again, the actual speed is compared to the required speed of rotation, and the timing of the gate pulses to the triac 14 is adjusted accordingly.

In a third embodiment of the invention, referring to figure 3B, it is shown that the three current values Ia, Ib, Ic pass through a given value It at three different times ta, tb, tc. Thus, measurements of current may be repeatedly made from the moment of application of a triac pulse and compared to the given value It, to detect times ta, tb, tc. From the measured times ta, tb, tc, and knowing It, the speed of rotation of the motor may be calculated, according to equation II, above. This speed V may then be compared to the required speed of rotation. The series resistor 22a or magnetic current detector 22b may be used. The elapsed time ta, tb, tc since the previous voltage zero crossing point is counted by counter COUN. The timing of the gate pulses to the triac 14 is adjusted accordingly.

In a fourth embodiment of the invention, referring to figure 3C, the rate of decrease of the current just before the triac ceases to conduct, at the end of each current half-cycle, is measured at a certain time ts. This rate of decrease is also a temporal property of the waveform of this current, and of the speed of rotation of the universal motor. For this method, the equation I may be differentiated to obtain:

$$(di/dt) = (w.Vp \cos w.ts)/w(Rf + Kv.V) \qquad \text{III.}$$

In this equation III, the numerator is known, so the instantaneous slope, di/dt, of the current i at time ts is a function of the speed of rotation V. As ts is known, being imposed by counter COUN, calculation of V from a measured slope is relatively simple. Alternatively, a look-up table may be stored in ROM to give a direct output of V for a known di/dt. Such a look up table may equally be stored for the other embodiments of the invention described.

The series resistor 22a or magnetic current sensor 22b may be used to measure the current i. By storing a sequence of current values during a fixed portion of each half cycle, for example during 1ms around each time ts, for example each voltage zero crossing point, the current gradient may be determined by CPU. In the latter case, the instant ts is the voltage zero crossing point Tzc. From this current gradient, the speed of rotation of the universal motor may be deduced, compared to the required speed of rotation, and the timing of the triac pulses adjusted accordingly.

In a fifth embodiment of the invention, referring to figure 3D, the time at which the triac ceases to conduct varies with the magnitude of the current in the preceding half cycle. So, this time trr1, trr2, trr3, varies with the speed of rotation of the motor. In this fifth method, the inductance 12 is no longer ignored, and indeed causes the effect whereby the current ceases only after the voltage zero crossing point Tzc. The time between the voltage zero crossing point Tzc and the end of conduction is known as the recovery period. To measure it, the microcontroller 16 may continually measure the current from the time of application of a gate pulse to the triac, or from a zero crossing point Tzc. Once this current is measured as zero, or below a certain low threshold value, the time elapsed is stored. As, in this case, only the presence or absence of a current is required, the simple connection 22c, may be used as current sensor.

The time elapsed may be used with a look up table in ROM to determine the actual motor speed, and thus enable the timing of triac pulses to be adjusted to cause the measured speed of the motor to approach the requested speed. The equation embodied in such a look-up table will be:

$$i(t) = (-\exp(-k(t - td)/M))(B \sin w.td + C \cos w.td)$$

$$+ B \sin w.t + C \cos w.t \qquad IV,$$

where: $k = Rf + Kv.V$; td is the instant of application of a gate pulse during a half cycle; M is the value of inductance 12; $B = k.Vp/D$; $C = -M.w.Vp/D$; and $D = k^2 + M^2.W^2$.

At low power, the triac turn on time approaches the recovery period. The current flowing does not fully develop before the voltage zero crossing point. The recovery time becomes shortened. As the triac turn on time approaches the next voltage zero crossing point, the recovery time approaches zero, independently of the actual motor speed. This effect may be taken into consideration by the microcontroller, by including values of turn-on time in its calculation of phase control and triac gate pulse timing. Although this effect may be calculated, it may also be determined empirically and stored in a look up table.

As discussed above, the waveforms of the currents are not simply proportional to the applied voltage. The instantaneous current at a given point in the voltage half cycle may vary with the level of phase control, determined by the timing of the triac pulses. The look up tables stored in ROM may be designed also to compensate the motor control for such distortions of the current waveform. Also, nominally identical motors will have slightly different values of Rf and Kv. In consumer applications, it is not economically possible to programme individual microcontrollers to reflect an individual motor's characteristics. The speed regulation thus achieved will thus be imperfect.

However, according to the invention, speed regulation of a sufficient accuracy may be achieved without the need for costly and complicated mechanical speed feedback apparatus. In consumer applications, a speed regulation to an accuracy of 30% is often sufficient, and this accuracy may easily be provided by the method and circuit of the invention.

Although certain embodiments of the invention have been described by way of example, numerous variants will be apparent to those skilled in the art, without departing from the scope of the invention. In particular, any instantaneous temporal property of the current waveform other than those described may be used, provided that information as to the relative magnitude of the instantaneous current at some particular time can be deduced.

Also, any circuit that can measure such temporal properties and compare them to a predetermined value, and adjust the phase control signals accordingly, may be used. It is not necessary to use a microcontroller, although use of a microcontroller such as the ST6 from SGS-THOMSON Microelectronics provides a simple and cost effective solution.

Although the embodiments described use a triac as phase controlling element, any other component able to perform phase control may be used. These may exhibit full wave of half wave control.

## Claims

1. A method for controlling the speed of a universal motor (10) driven by an AC source (Vin), comprising the steps of:

   - phase controlling (14) a current (i) through the universal motor;

     characterised in that it includes the steps of:

   - measuring (ADC) a value of an instantaneous temporal property of a waveform of the current, to determine the speed of rotation of the universal motor;
   - comparing the measured value of the temporal property to a predetermined value ; and
   - adjusting the phase control to cause the measured value of the instantaneous temporal property to approach the predetermined value.

2. A method according to claim 1 further comprising the step of selecting (20) the predetermined value from a number of stored values.

3. A method according to claim 1 or claim 2 wherein the measured instantaneous temporal property is the instantaneous current flowing at a predetermined point in time (T) during an AC cycle.

4. A method according to claim 1 or claim 2 wherein the measured instantaneous temporal property is the instantaneous current flowing at a voltage zero crossing point (Tzc) in an AC cycle.

5. A method according to claim 1 or claim 2 wherein the measured instantaneous temporal property is the rate of decrease of the current (di/dt) at a certain time (ts), during an AC half cycle.

6. A method according to claim 1 or claim 2 wherein the measured instantaneous temporal property is the period of time between a voltage zero crossing point (Tzc) and the end of current conduction (trr1), during an AC half cycle.

7. A method according to claim 1 or claim 2 wherein the measured instantaneous temporal property is the period of time between a voltage zero crossing point (Tzc) and the point of time (ta) when the current attains a predetermined value (It).

8. A method according to claim 1 or claim 2 wherein the predetermined value is determined as a function of the level of the phase control.

9. A circuit for the control of the speed of a universal motor (10) driven from an AC voltage (Vin), comprising:

   - a phase control component (14) in series with the universal motor;

     characterised in that it comprises:

   - a current detector (22a) for measuring a value of an instantaneous temporal property of a waveform of the current (i) flowing through the universal motor;
   - a pulse generating circuit (I/O) for generating control signals to the phase control component;
   - a timing circuit (COUN) for timing the control signals with respect to the AC voltage cycle;
   - a reference circuit for indicating a predetermined value of the instantaneous temporal property of the waveform of the current through the universal motor;
   - a control circuit for controlling the timing circuit to cause the measured value of the instantaneous temporal property to approach the predetermined value.

10. A circuit according to claim 9 wherein the predetermined value is selected (20) from a number of stored values.

11. A circuit according to claim 9 or claim 10 wherein the pulse generating circuit, the timing circuit, the measuring circuit, the control circuit and the reference circuit are replaced by a microcontroller (16) including a synchronisation input (SYNC), an analogue to digital converter (ADC), a counter (COUN), a voltage reference (Vref), an input/output circuit (I/O), a central processing unit (CPU) and a non-volatile memory (ROM).

12. A circuit according to claim 9 wherein the measured instantaneous temporal property is the instantaneous current flowing at a predetermined point in time (T) during an AC cycle.

13. A circuit according to claim 9 wherein the measured instantaneous temporal property is the instantaneous current flowing at a voltage zero crossing point (Tzc) in an AC cycle.

14. A circuit according to claim 9 wherein the measured instantaneous temporal property is the rate of decrease of the instantaneous current (di/dt) at a certain time (ts), during an AC half cycle.

15. A circuit according to claim 9 wherein the measured instantaneous temporal property is the period of time between a voltage zero crossing point (Tzc) and the end of current (trrl), during an AC half cycle.

16. A circuit according to claim 9 wherein the measured instantaneous temporal property is the period of time between a voltage zero crossing point (Tzc) and the point of time (ta) when the current attains a predetermined value (It).

**Patentansprüche**

1. Verfahren zum Steuern der Geschwindigkeit eines durch eine Wechselstromquelle (Vin) angetriebenen Universalmotors (10), mit den folgenden Schritten:

   - Steuern (14) der Phase eines durch den Universalmotor fließenden Stroms (i);

     dadurch gekennzeichnet, daß es die folgenden Schritte enthält:

   - Messen (ADC) eines Wertes einer momentanen zeitlichen Eigenschaft einer Signalform des Stroms, um die Drehzahl des Universalmotors zu bestimmen;

- Vergleichen des gemessenen Wertes der zeitlichen Eigenschaft mit einem vorgegebenen Wert; und

- Einstellen der Phasensteuerung, damit sich der gemessene Wert der momentanen zeitlichen Eigenschaft dem vorgegebenen Wert annähert.

2. Verfahren nach Anspruch 1, ferner mit dem Schritt des Wählens (20) des vorgegebenen Wertes aus einer Anzahl gespeicherter Werte.

3. Verfahren nach Anspruch 1 oder Anspruch 2, bei dem die gemessene momentane zeitliche Eigenschaft der momentane Strom ist, der während eines Wechselstromzyklus zu einem vorgegebenen Zeitpunkt (T) fließt.

4. Verfahren nach Anspruch 1 oder Anspruch 2, bei dem die gemessene momentane zeitliche Eigenschaft der momentane Strom ist, der in einem Wechselstromzyklus bei einem Spannungsnulldurchgangspunkt (Tzc) fließt.

5. Verfahren nach Anspruch 1 oder Anspruch 2, bei dem die gemessene momentane zeitliche Eigenschaft die Abnahmegeschwindigkeit des Stroms (di/dt) zu einem bestimmten Zeitpunkt (ts) während eines halben Wechselstromzyklus ist.

6. Verfahren nach Anspruch 1 oder Anspruch 2, bei dem die gemessene momentane zeitliche Eigenschaft die Zeitperiode zwischen einem Spannungsnulldurchgangspunkt (Tzc) und dem Ende einer Stromleitung (trrl) während eines halben Wechselstromzyklus ist.

7. Verfahren nach Anspruch 1 oder Anspruch 2, bei dem die gemessene momentane zeitliche Eigenschaft die Zeitperiode zwischen einem Spannungsnulldurchgangspunkt (Tzc) und dem Zeitpunkt (ta) ist, zu dem der Strom einen vorgegebenen Wert (It) annimmt.

8. Verfahren nach Anspruch 1 oder Anspruch 2, bei dem der vorgegebene Wert in Abhängigkeit vom Pegel der Phasensteuerung bestimmt wird.

9. Schaltung zum Steuern der Drehzahl eines von einer Wechselspannung (Vin) angetriebenen Universalmotors (10), mit:

- einer Phasensteuerungskomponente (14), die mit dem Universalmotor in Serie geschaltet ist;

dadurch gekennzeichnet, daß sie enthält:

- einen Stromdetektor (22a) zum Messen eines Wertes einer momentanen zeitlichen Eigenschaft einer Signalform des durch den Universalmotor fließenden Stroms (i);

- eine Impulserzeugungsschaltung (I/O) zum Erzeugen von Steuersignalen für die Phasensteuerungskomponente;

- eine Synchronisierschaltung (COUN) zum Synchronisieren der Steuersignale mit dem Wechselspannungszyklus;

- eine Referenzschaltung zum Angeben eines vorgegebenen Wertes der momentanen zeitlichen Eigenschaft der Signalform des durch den Universalmotor fließenden Stroms;

- eine Steuerschaltung zum Steuern der Synchronisierschaltung, damit sich der gemessene Wert der momentanen zeitlichen Eigenschaft dem vorgegebenen Wert annähert.

10. Schaltung nach Anspruch 9, bei der der vorgegebene Wert aus einer Anzahl gespeicherter Werte gewählt (20) wird.

11. Schaltung nach Anspruch 9 oder Anspruch 10, bei der die Impulserzeugungsschaltung, die Synchronisierschaltung, die Meßschaltung, die Steuerschaltung und die Referenzschaltung durch einen Mikrocontroller (16) ersetzt sind, der einen Synchronisationseingang (SYNC), einen Analog/Digital-Umsetzer (ADC), einen Zähler (COUN), eine Spannungsreferenz (Vref), eine Eingangs/Ausgangs-Schaltung (I/O), eine Zentraleinheit (CPU) sowie einen nichtflüchtigen Speicher (ROM) enthält.

12. Schaltung nach Anspruch 9, bei der die gemessene momentane zeitliche Eigenschaft der momentane Strom ist, der während eines Wechselstromzyklus zu einem vorgegebenen Zeitpunkt (T) fließt.

13. Schaltung nach Anspruch 9, bei der die gemessene momentane zeitliche Eigenschaft der momentane Strom ist, der während eines Wechselstromzyklus bei einem Spannungsnulldurchgangspunkt (Tzc) fließt.

14. Schaltung nach Anspruch 9, bei der die gemessene momentane zeitliche Eigenschaft die Abnahmegeschwindigkeit des momentanen Stroms (di/dt) zu einem bestimmten Zeitpunkt (ts) während eines halben Wechselstromzyklus ist.

15. Schaltung nach Anspruch 9, bei der die gemessene momentane zeitliche Eigenschaft die Zeitperiode zwischen einem Spannungsnulldurchgangspunkt (Tzc) und dem Ende des Stroms (trrl) während eines halben Wechselstromzyklus ist.

**16.** Schaltung nach Anspruch 9, bei der die gemessene momentane zeitliche Eigenschaft die Zeitperiode zwischen einem Spannungsnulldurchgangspunkt (Tzc) und dem Zeitpunkt (ta) ist, zu dem der Strom einen vorgegebenen Wert (It) annimmt.

## Revendications

**1.** Procédé pour contrôler la vitesse d'un moteur universel (10) commandé par une source alternative (Vin), comprenant les étapes consistant à :

- contrôler en phase (14) un courant (i) à travers le moteur universel ;

  caractérisé en ce qu'il comprend les étapes consistant à :

- mesurer (ADC) une valeur d'une propriété temporelle instantanée d'une forme d'onde du courant, pour déterminer la vitesse de rotation du moteur universel ;
- comparer la valeur mesurée de la propriété temporelle à une valeur prédéterminée ; et
- ajuster le réglage de phase pour faire tendre la valeur mesurée de la propriété temporelle instantanée vers la valeur prédéterminée.

**2.** Procédé selon la revendication 1 comprenant, de plus, l'étape consistant à sélectionner (20) la valeur prédéterminée parmi un certain nombre de valeurs mémorisées.

**3.** Procédé selon la revendication 1 ou la revendication 2, dans lequel la propriété temporelle instantanée mesurée est le courant instantané qui circule à un instant prédéterminé (T) pendant un cycle alternatif.

**4.** Procédé selon la revendication 1 ou la revendication 2, dans lequel la propriété temporelle instantanée mesurée est le courant instantané qui circule à un point de passage par zéro (Tzc) de la tension dans un cycle alternatif.

**5.** Procédé selon la revendication 1 ou la revendication 2, dans lequel la propriété temporelle instantanée mesurée est le taux de diminution du courant (di/dt) à un certain instant (ts), pendant un demi-cycle alternatif.

**6.** Procédé selon la revendication 1 ou la revendication 2, dans lequel la propriété temporelle instantanée mesurée est l'intervalle de temps entre un point de passage par zéro (Tzc) de la tension et la fin de la conduction de courant (trr1), pendant un demi-cycle alternatif.

**7.** Procédé selon la revendication 1 ou la revendication 2, dans lequel la propriété temporelle instantanée mesurée est l'intervalle de temps entre un point de passage par zéro (Tzc) de la tension et l'instant (ta) auquel le courant atteint une valeur prédéterminée (It).

**8.** Procédé selon la revendication 1 ou la revendication 2, dans lequel la valeur prédéterminée est déterminée comme une fonction du niveau du réglage de phase.

**9.** Circuit pour le contrôle de la vitesse d'un moteur universel (10) commandé à partir d'une tension alternative (Vin) comprenant :

  un composant de réglage de phase (14) en série avec le moteur universel ;

  caractérisé en ce qu'il comprend :

- un détecteur de courant (22a) pour mesurer une valeur d'une propriété temporelle instantanée d'une forme d'onde du courant (i) qui circule à travers le moteur universel ;
- un circuit de génération d'impulsions (I/O) pour générer des signaux de commande vers le composant de réglage de phase ;
- un circuit de synchronisation (COUN) pour synchroniser les signaux de commande par rapport au cycle de tension alternative ;
- un circuit de référence pour indiquer une valeur prédéterminée de la propriété temporelle instantanée de la forme d'onde du courant à travers le moteur universel ;
- un circuit de commande pour commander le circuit de synchronisation pour faire tendre la valeur mesurée de la propriété temporelle instantanée vers la valeur prédéterminée.

**10.** Circuit selon la revendication 9, dans lequel la valeur prédéterminée est sélectionnée (20) parmi un certain nombre de valeurs mémorisées.

**11.** Circuit selon la revendication 9 ou la revendication 10, dans lequel le circuit de génération d'impulsions, le circuit de synchronisation, le circuit de mesure, le circuit de commande et le circuit de référence sont remplacés par un micro-contrôleur (16) comprenant une entrée de synchronisation (SYNC), un convertisseur analogique-numérique (ADC), un compteur (COUN), une référence de tension (Vref), un circuit d'entrée/sortie (I/O), une unité centrale (CPU) et une mémoire non volatile (ROM).

**12.** Circuit selon la revendication 9, dans lequel la propriété temporelle instantanée mesurée est le courant instantané qui circule à un instant prédéterminé (T) pendant un cycle alternatif.

**13.** Circuit selon la revendication 9, dans lequel la propriété temporelle instantanée mesurée est le courant instantané qui circule à un point de passage par zéro (Tzc) de la tension dans un cycle alternatif.

**14.** Circuit selon la revendication 9, dans lequel la propriété temporelle instantanée mesurée est le taux de diminution du courant instantané (di/dt) à un certain instant (ts), pendant un demi-cycle alternatif.

**15.** Circuit selon la revendication 9, dans lequel la propriété temporelle instantanée mesurée est l'intervalle de temps entre un point de passage par zéro (Tzc) de la tension et la fin du courant (trrl), pendant un demi-cycle alternatif.

**16.** Circuit selon la revendication 9, dans lequel la propriété temporelle instantanée mesurée est l'intervalle de temps entre un point de passage par zéro (Tzc) de la tension et l'instant (ta) auquel le courant atteint une valeur prédéterminée (It).

FIG_1

FIG_2

FIG_3A

FIG_3B

FIG_3C

FIG_3D